# FASCICULE DE BREVET EUROPEEN

(11) **EP 0 404 620 B1**
(45) Date de publication et mention de la délivrance du brevet: **21.04.1993**
(21) Numéro de dépôt: 90401487.5
(22) Date de dépôt: 01.06.1990
(51) Int. Cl.: B60P 1/64

(54) **Bras de halage à crochet d'accostage articulé et véhicule équipé de ce bras**
Schlepparm mit selbstpositionierendem Gelenkhaken und damit ausgerüstetes Fahrzeug
Hauling arm with an articulated selfpositioning hook and vehicle equipped with such an arm

(30) Priorité: 23.06.1989 FR 8908415
(43) Date de publication de la demande: 27.12.1990
(73) Titulaire: MARREL, F-42160 Andrézieux-Bouthéon (FR)
(72) Inventeur: Lambert, Bernard, F-71960 Chevagny-Les-Chevrieres (FR); Januel, Bernard, F-42100 Rochetaillee (FR)
(74) Mandataire: Rinuy, Santarelli

(56) Documents cités:
- EP-A- 0 107 326
- FR-A- 2 393 697
- GB-A- 2 106 584
- US-A- 4 677 930

## Description

L'invention concerne un appareil de halage à bras, notamment du type potence de chargement/déchargement.

Une potence de chargement/déchargement est un type particulier de halage à bras, destiné à être monté sur le châssis d'un véhicule pour y charger ou décharger des charges telles que conteneurs, caisses, bennes, plates-formes et analogues.

Des exemples de telles potences sont donnés dans les documents FR-2.109.109 et FR-2.185.520.

Ces potences comportent un bras coudé disposé dans un plan vertical longitudinal du véhicule et formé d'une poutre articulée sur un axe transversal lié directement ou indirectement au châssis de ce véhicule et d'une colonne raccordée à angle droit à cette poutre et munie en une extrémité libre d'un crochet de préhension.

Pour la saisie d'une charge à haler sur ce châssis, il faut actuellement contrôler l'angle de pivotement vers l'arrière du bras coudé de manière à amener exactement la fente de pénétration du crochet de préhension en regard horizontalement d'un anneau ou barreau de préhension dont la charge est munie puis, par recul du véhicule vers la charge, faire pénétrer ledit anneau ou barreau dans le crochet.

L'accrochage d'une charge à haler nécessite donc du doigté de la part de l'opérateur qui pilote la manoeuvre et qui doit impérativement disposer d'une bonne visibilité.

Il est toutefois des applications et des emplacements où cette exigence de visibilité doit pouvoir être supprimée (notamment chargement de nuit). D'autre part on recherche ici comme ailleurs à réduire les temps de manoeuvre et les énergies consommées, même lorsque les opérateurs n'ont pas encore acquis le doigté nécessaire pour piloter au mieux une telle manoeuvre d'accrochage.

L'invention a pour objet de répondre à cet objet, grâce à un aménagement de la portion terminale du bras et du crochet qui permette de piloter en aveugle, rapidement et avec une consommation réduite d'énergie, une manoeuvre d'accrochage d'une charge à haler, même en cas d'incertitudes quant à la position relative du bras et de l'anneau/barreau de préhension de la charge (dans le cas par exemple du chargement sur un véhicule d'une charge de format imprécis ou situé sur un sol irrégulier, c'est-à-dire en pente, en contrebas ...)

Elle propose à cet effet, de façon générale, un appareil de halage à bras coudé avec une partie formant colonne, comportant, sur une extrémité libre d'un tronçon terminal se trouvant au bout de la partie formant colonne, un crochet de préhension comportant un bec et une griffe délimitant conjointement par leurs extrémités libres une fente de pénétration destinée à être franchie par un barreau de préhension solidaire d'une charge à haler, caractérisé en ce que le bec et cette griffe ont un écartement relatif variable, étant montés mobiles l'un par rapport à l'autre au sein de ce crochet entre une configuration d'ouverture maximale et une configuration d'ouverture minimale, ce crochet comportant un corps de crochet muni à l'opposé du bec d'un jambage, bordé par une rampe d'accostage se prolongeant jusqu'à l'extrémité libre du bec, et articulé en son extrémité opposée au bec autour d'un axe transversal porté par le tronçon terminal, entre une configuration d'accostage en arrière par rapport au tronçon terminal et une configuration normale dans laquelle la rampe d'accostage est approximativement parallèle à ce tronçon terminal, des moyens de manoeuvre étant prévus pour commander en position le corps de crochet par rapport au tronçon terminal et la position relative du bec et de la griffe.

Selon des dispositions préférées de l'invention, éventuellement combinées :
- le bec est porté par le corps de crochet tandis que l'extrémité libre de la griffe est formée par l'extrémité d'un linguet engagé dans une rainure du corps de crochet entre deux joues parallèles reliées par une âme bordant l'ouverture interne du crochet, ce linguet longeant cette âme dans la configuration d'ouverture minimale ;
- les moyens de manoeuvre comportent un vérin lié au tronçon terminal et au linguet derrière la rampe ;
- ce linguet est monté pivotant par rapport au corps de crochet entre ses positions extrêmes en étant articulé autour d'une première goupille traversant la rainure et engagée dans des perçages de ce corps de crochet ;
- dans les joues latérales du corps de crochet sont prévues des lumières en arc de cercle centrés sur ladite goupille qui sont traversées par une seconde goupille fixe par rapport au linguet ;
- les moyens de manoeuvre comportent un vérin lié au tronçon terminal et à la seconde goupille ;
- cette seconde goupille, plus éloignée du bec que la première goupille, est liée à une extrémité du linguet opposée à son extrémité libre ;
- l'extrémité libre du linguet est élargie et comporte des épaulements adaptés, en configuration d'ouverture maximale, à être affrontés à des méplats ménagés sur les tranches des zones latérales du corps de crochet ;
- le jambage est articulé sur une saillie latérale du tronçon terminal du bras.

L'invention propose également un véhicule équipé d'un tel appareil de halage à bras, lequel est avantageusement du type potence à bras coudé monté pivotant autour d'un axe transversal au châssis du véhicule.

Des objets, caractéristiques et avantages de l'invention ressortent de la description qui suit, donnée à titre d'exemple en regard des dessins annexés sur lesquels :
- la figure 1 est une vue en élévation d'un appareil de halage à bras, ou bras de halage, conforme à l'invention, en configuration coudée d'accostage et d'ouverture maximale du crochet,
- la figure 2 en est une vue similaire, en configuration redressée et d'ouverture minimale du crochet,
- les figures 3 et 4 sont des vues en élévation, respectivement de dos et de profil, du corps de crochet de l'appareil des figures 1 et 2,
- les figures 5 et 6 sont des vues, respectivement de profil et de dessous, du linguet que comporte ce crochet, et
- les figures 7 à 15 sont des vues en élévation latérale d'un véhicule équipé du bras de halage des figures 1 à 6, depuis une configuration de transport à vide jusqu'à une configuration dans laquelle une plate-forme est chargée sur le véhicule, les figures 9 à 11 proposant trois exemples possibles de positionnement relatif entre le véhicule et la plate-forme au sol destinée à être chargée.

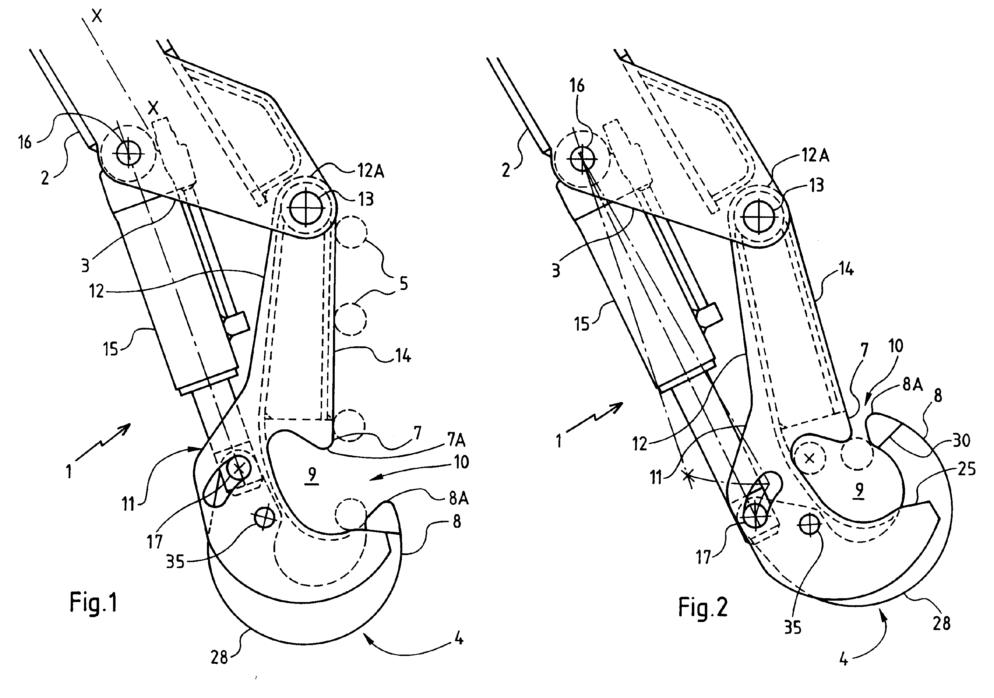

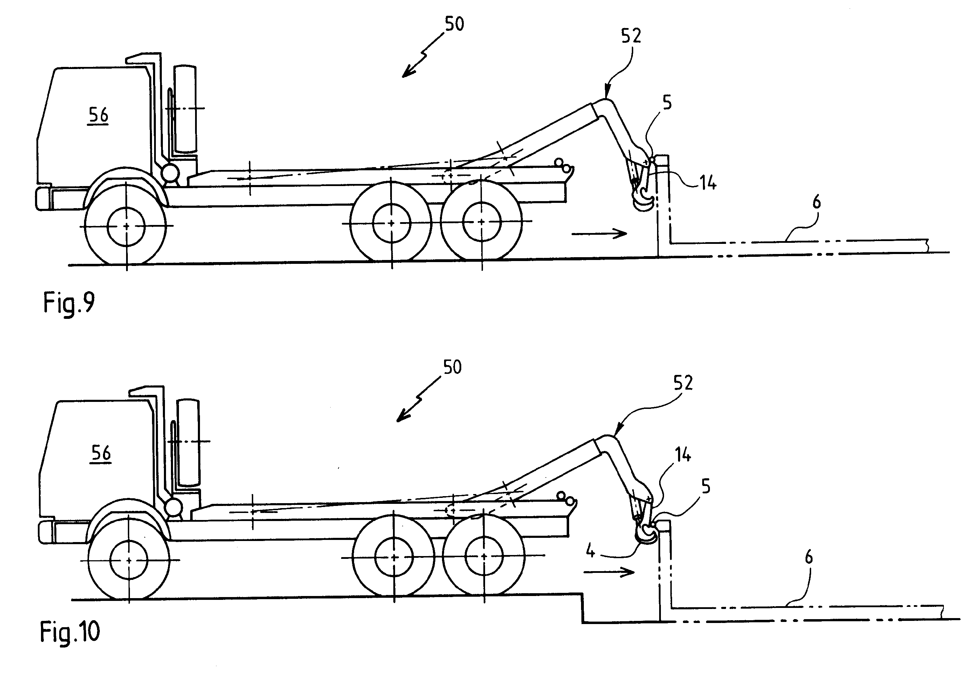

Les figures 1 à 6 représentent conjointement un bras de halage 1 comportant un tronçon terminal 2 muni en son extrémité libre 3 d'un crochet de préhension 4 destiné à accrocher un anneau ou barreau de préhension 5 dont est muni une charge à manipuler 6, ici une plate-forme (voir les figures 9 à 15).

Ce crochet de préhension 4 comporte un bec 7 et une griffe 8 formant conjointement une boucle ouverte 9 et dont des extrémités libres en regard 7A et 8A délimitent une fente 10 de pénétration dans cette boucle.

Ce bec et cette griffe ont un écartement relatif variable, étant montés mobiles l'un par rapport à l'autre au sein de ce crochet.

Le crochet est en effet formé d'un corps de crochet 11 dont le bec 7 est solidaire et qui se prolonge, à l'oppose de ce bec, par un jambage 12 articulé en son extrémité 12A autour d'un axe 13, transversal au crochet, porté par l'extrémité 3 du tronçon 2.

Ce jambage 12 comporte une tranche 14 approximativement rectiligne se prolongeant jusqu'à l'extrémité 7A du bec et destinée à constituer une rampe d'accostage pour le barreau de préhension 5 représenté en pointillés en plusieurs emplacements successifs aux figures 1 et 2.

Un organe de manoeuvre 15 est prévu pour commander en mouvement le corps de crochet 11 entre une configuration "cassée" d'accostage dans laquelle le jambage est incliné par rapport à l'axe X-X du tronçon terminal 2 (formant un coude) - voir la figure 1 - et une configuration normale de repos dans laquelle la rampe 14 est approximativement parallèle au tronçon terminal - voir la figure 2 -. En configuration d'accostage, la rampe est en pratique inclinée d'environ 10 à 30° par rapport à l'axe X-X.

Cet organe de manoeuvre 15 est ici un vérin hydraulique disposé à peu près parallèlement à l'axe du tronçon terminal 2, derrière le jambage 12, en étant articulé sur des axes transversaux 16 et 17 respectivement liés au tronçon terminal et au crochet. Pour augmenter le bras de levier entre le vérin et l'axe 13, ce dernier est avantageusement sur une saillie latérale 3A de ce bras, qui peut en cas de besoin participer à l'accostage.

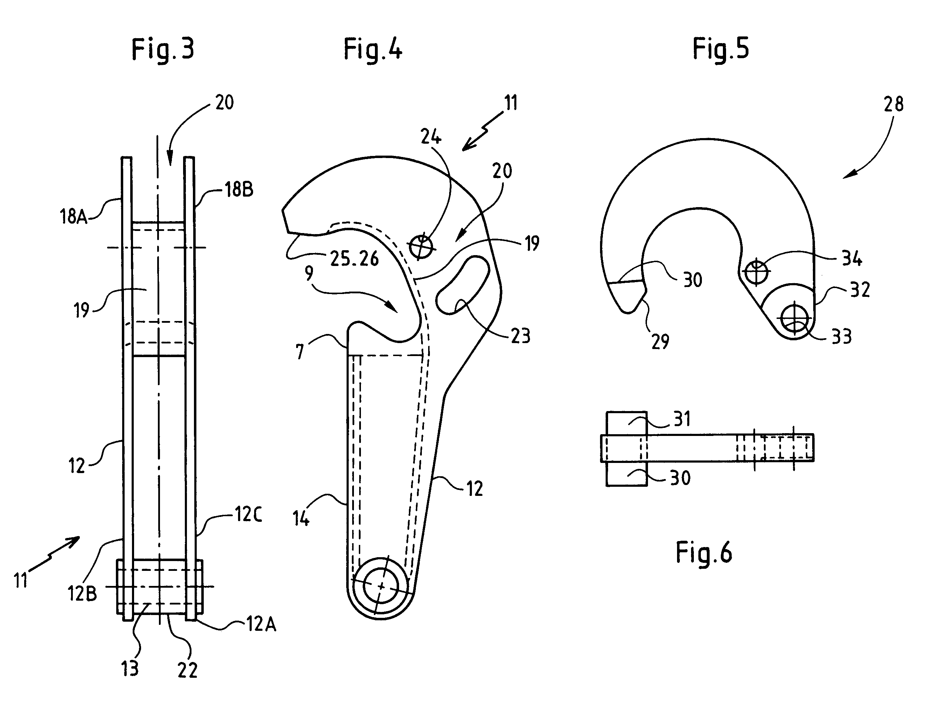

Ce corps de crochet 11 comporte, en outre du bec qui est ici une portion massive, une portion évidée comportant deux joues latérales 18A et 18B - voir la figure 3 - solidaires du bec 7 et reliées par une âme recourbée 19 bordant l'intérieur de l'ouverture 9 du crochet. Ce corps de crochet 11 comporte ainsi, dans le plan de la boucle ouverte bordée par la griffe et le bec, une portion de griffe munie d'une rainure 20, ouverte vers l'extérieur, à l'opposé du bec 7, et dont l'âme 19 constitue le fond.

Le jambage 12 est en fait lui aussi formé de deux joues 12B et 12C respectivement coplanaires aux joues latérales 18A et 18B, et reliées par un tube 22 destiné à recevoir l'axe 13. La rampe 14 peut être au choix matérialisée, seulement par les tranches de ces joues 12B et 12C, ou en outre par une plaque reliant ces tranches.

Dans chacune des joues latérales sont ménagés, décalés parallèlement à la rampe 14, une lumière 23 et un perçage 24, cette lumière 23 étant plus éloignée du bec et du plan de la rampe 14 que le perçage 24 et étant formée d'un arc centré sur ce perçage.

Ces joues latérales sont, à l'opposé du bec, recourbées transversalement à la rampe et présentent sur leurs tranches des méplats d'appui 25 et 26 disposés au moins approximativement en regard du bec 6.

Dans la rainure 20 est engagé un linguet 28 de forme arquée adapté à épouser le contour de l'âme 19 constituant le fond de la rainure. Il présente une extrémité libre 29 qui vient en saillie hors de la rainure et qui est au moins approximativement orientée vers le bec 6.

Cette extrémité en saillie 29 est ici élargie et présente des épaulement 30 et 31 adaptés à venir en appui contre les méplats 25 et 26.

Ce linguet comporte une autre extrémité 32 au voisinage de laquelle sont ménagés deux ouvertures 33 et 34, ici des perçages, adaptés à venir, lorsque ce linguet est engagé dans la rainure en longeant l'âme 19, en regard respectivement des ouvertures 23 et 24.

Dans les perçages 24 et 34 est engagée une goupille 35 destinée à assurer un montage pivotant du linguet 28 dans la rainure 20. L'extrémité libre 32 est conformée en sorte de permettre un pivotement du linguet 28 dans la rainure autour de la goupille 35. Cette extrémité libre présente à cet effet un flanc 36 qui, lorsque le linguet longe l'âme 19, s'écarte de cette dernière depuis le perçage 34 jusqu'au perçage 33.

Dans le perçage 33 et dans les lumières 29 est engagée une autre goupille ici constituée par l'axe 17 par lesquel l'organe de manoeuvre 15 est lié au crochet. En fait, cet organe est directement lié au tronçon terminal du bras et au linguet 18.

En variante non représentée, ce crochet peut être remplacé par la variante de crochet décrite dans la demande de brevet français 89-02122 du 17 Février 1989.

Il est à noter que dans l'exemple de réalisation considéré ici, un même organe de manoeuvre 15 est utilisé pour la commande en pivotement du corps de crochet par rapport au tronçon terminal 2 du bras 1 et du linguet par rapport à ce corps de crochet.

Dans une variante non représentée, des organes de manoeuvrre distincts peuvent être prévus pour ces deux mouvements.

On appréciera que les mouvements relatifs du linguet et du corps de crochet sont assimilables à ceux d'un casque, dont l'extrémité libre 29 constituerait une sorte de visière.

Les lignes 7 à 15 décrivent les phases successives du chargement de la plate-forme 5 sur le châssis 51 d'un véhicule 50 de type camion équipé d'un appareil de halage à bras 52 dont le bras est conforme aux figures 1 à 6.

Plus précisément ce bras, dans son ensemble, est coudé et disposé dans un plan vertical longitudinal du véhicule et formé d'une poutre 53, ici télescopique, articulée sur un axe transversal 54 lié au moins indirectement au châssis 51 et d'une colonne 55, terminée par le tronçon 2 et le crochet 4, raccordée à angle droit à l'extrémité libre de la poutre.

En configuration de transport, cette colonne vient derrière la cabine 56 du véhicule 50 en longeant des équipements 57 de ce véhicule, ici par exemple une roue de secours.

En dehors du tronçon terminal 2 et du crochet 4, le véhicule 50 et son appareil de halage à bras sont classiques et ne seront pas détaillés ici plus avant. Il est par exemple conforme aux enseignements des brevets FR-2.109.109 et FR-2.185.520. En fait, la poutre 53 est ici télescopique.

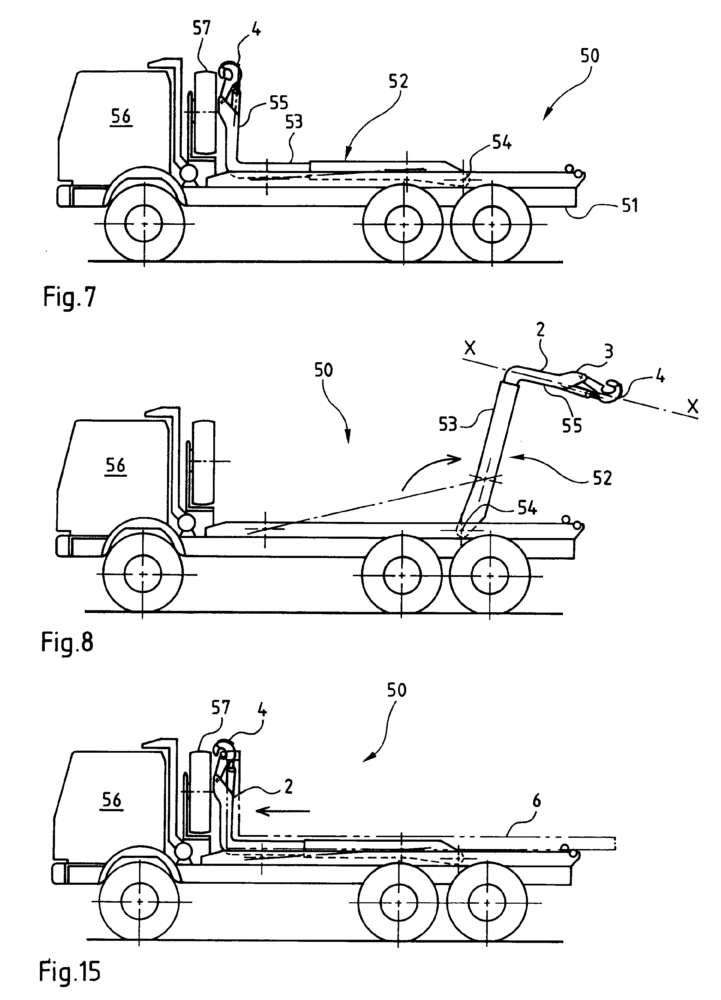

A partir de la configuration de la figure 7, le bras 52 est basculé en arrière (voir figure 8).

Au plus tard à la fin de ce mouvement de "développement" on commande la rétraction du vérin 15 qui, de façon conjuguée, fait passer le crochet 4 de sa configuration de transport (rampe 14 approximativement parallèle au tronçon terminal 2 et linguet à proximité immédiate de l'âme 19 et donc bec et griffe rapprochés - voir la figure 2 - à sa configuration d'accostage (rampe inclinée par rapport au tronçon 2 et linguet écarté de l'âme 19, avec affrontement des méplats 25 et 26 et des épaulements 30 et 31, et donc bec et griffe écartés - voir la figure 1 -.

A la fin du basculement vers l'arrière du bras la rampe 14 est approximativement verticale - figures 9 à 11 -.

Le véhicule 50 recule ensuite jusqu'à ce que la rampe d'accostage (le jambage 12, voire la partie extrême coudée 3 du bras) vienne en contact avec le barreau de préhension 5 de la plate-forme 6.

Le circuit d'alimentation classique en soi (non représenté) du vérin 15 est avantageusement équipé d'une valve de sécurité permettant de délimiter les efforts dûs au choc lors de cette mise en contact.

Les figures 9 à 11 représentent trois exemples de positionnement de la plate-forme 6 par rapport au véhicule : plate-forme reposant sur un sol à niveau avec celui sur lequel est stationné le véhicule, sol en contrebas ou sol incliné, descendant vers le véhicule. Dans les trois cas, le barreau vient en contact avec la rampe d'accostage 14.

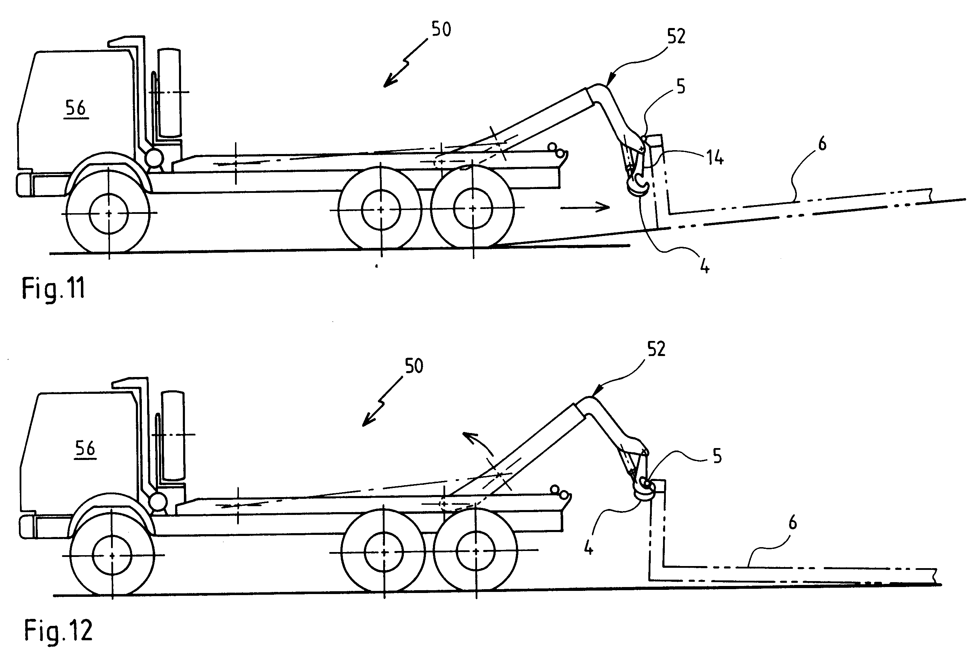

La "recherche" et l'introduction du barreau 5 dans l'ouverture 9 du crochet s'effectue par "relevage" partiel du bras 52 (voir la figure 12), le vérin 15 restant rétracté (ou plus simplement non alimenté).

On appréciera quela forme et la mise à la verticale de l'extrémité 12 + 4 du bras 52 permettent d'obtenir pour celle-ci une trajectoire approximativement verticale lors de ce "relevage" jusqu'à l'introduction du barreau dans le crochet. En outre, comme cette configuration d'accostage s'obtient par pivotement en arrière du crochet, il n'en résulte, en configuration de transport- figure 7 - aucun encombrement excessif vers l'avant susceptible de heurter les équipements 57.

Lorsque la plate-forme commence à être soulevée (voir la figure 12) il se produit une montée en pression du côté de la chambre de grande section du vérin 15. Cette élévation rapide de la pression correspond à l'à-coup que peut percevoir le conducteur du véhicule lors du début de décollage de la plate-forme du sol. Cette pression peut être aussi enregistrée par un capteur de pression ou pressostat relié à la chambre grosse section du vérin.

La séquence, début de relevage de la plate-forme, est alors arrêtée soit manuellement par le conducteur ou automatiquement dès l'émission du signal correspondant à la montée en pression du vérin.

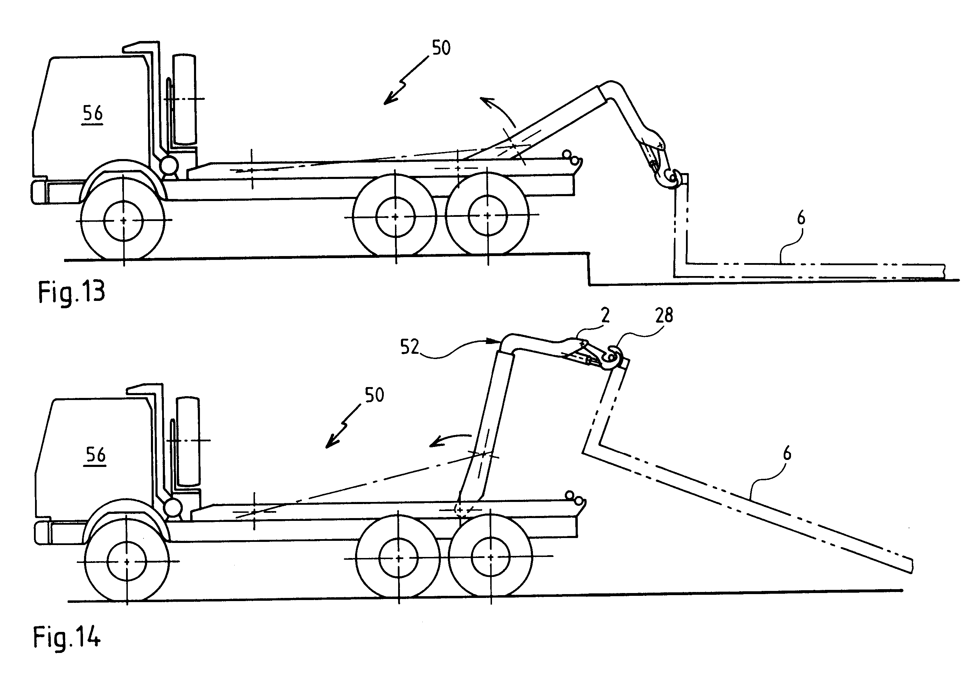

Le vérin d'extrémité de potence est ensuite alimenté côté grosse section, ce qui entraîne le redressement de la potence et la fermeture du casque verrouillant ainsi l'anneau de la plate-forme à l'intérieur du crochet de préhension - figure 13 proposée dans le cas de la plate-forme en contrebas -.

L'opération de relevage de la plate-forme est reprise après l'opération de redressement de l'extrémité de la potence et la fermeture du casque de crochet - figure 14 -.

Le verrouillage de la plate-forme sur le véhicule en position de transport ou roulage est obtenu par l'exécution du mouvement de coulisse - figure 15 -.

Le déchargement de la plate-forme est obtenu par une manoeuvre inverse : l'ouverture du crochet de potence est obtenue par commande semi-automatique ou automatique du vérin d'extrémité de potence remis en configuration vérin rentré. Cette ouverture est accompagnée d'une mise à la verticale de l'extrémité de la potence, ce qui provoque l'extraction automatique de l'anneau de la plate-forme. Celui-ci remonte le long de l'extrémité de la potence jusqu'à la fin du mouvement d'extrémité de potence. Le véhicule peut alors se retirer et l'appareil est remis en configuration roulage.

On appréciera que le fait que le jambage 12 soit articulé sur le tronçon terminal permet d'assurer la préhension du barreau de la plate-forme sans déplacement du véhicule à part le recul précité. Le verrouillage du barreau à l'intérieur du crochet est assuré par la fermeture semi-automatique du crochet, commandée après pénétration du barreau. La fonction d'ouverture ou de fermeture du casque est synchronisée entre la fonction d'inclinaison en arrière du jambage 12. Ces deux fonctions sont ici assurées par un seul vérin double effet liant les articulations autour des axes 13 et 35.

## Revendications

1. Appareil de halage à bras coudé avec une partie formant colonne (55) comportant, sur une extrémité libre (3) d'un tronçon terminal (2) se trouvant au bout de la partie formant colonne (55), un crochet de préhension (4) comportant un bec (7) et une griffe (8) délimitant conjointement par leurs extrémités libres une fente de pénétration (10) destinée à être franchie par un barreau de préhension (5) solidaire d'une charge à haler, caractérisé en ce que ce bec et cette griffe ont un écartement relatif variable, étant montés mobiles l'un par rapport à l'autre au sein de ce crochet entre une configuration d'ouverture maximale et une configuration d'ouverture minimale, ce crochet comportant un corps de crochet (11) muni à l'opposé du bec (7) d'un jambage (12), bordé par une rampe d'accostage (14) se prolongeant jusqu'à l'extrémité libre (7A) du bec, et articulé en son extrémité (12A) opposée au bec autour d'un axe transversal (13) porté par le tronçon terminal, entre une configuration d'accostage en arrière par rapport au tronçon terminal et une configuration normale dans laquelle la rampe d'accostage (14) est approximativement parallèle à ce tronçon terminal, des moyens de manoeuvre (15) étant prévus pour commander en position le corps de crochet (11) par rapport au tronçon terminal (2) et la position relative du bec et de la griffe.

2. Appareil de halage à bras selon la revendication 1, caractérisé en ce que le bec (7) est porté par le corps de crochet tandis que l'extrémité libre (8A) de la griffe est formée par l'extrémité d'un linguet (28) engagé dans une rainure (20) du corps de crochet entre deux joues parallèles (18A, 18B) reliées par une âme (19) bordant l'ouverture interne (9) du crochet, ce linguet longeant cette âme dans la configuration d'ouverture minimale.

3. Appareil de halage à bras selon la revendication 2, caractérisé en ce que les moyens de manoeuvre comportent un vérin lié au tronçon terminal et au linguet derrière la rampe.

4. Appareil de halage à bras selon la revendication 2 ou la revendication 3, caractérisé en ce que ce linguet (28) est monté pivotant par rapport au corps de crochet entre ses positions extrêmes en étant articulé autour d'une première goupille (35) traversant la rainure (20) et engagée dans des perçages (24) de ce corps de crochet.

5. Appareil de halage à bras selon la revendication 3, caractérisé en ce que dans les joues latérales du corps de crochet sont prévues des lumières (23) en arc de cercle centrés sur ladite goupille (35) qui sont traversées par une seconde goupille (17) fixe par rapport au linguet.

6. Appareil de halage à bras selon la revendication 5, caractérisé en ce que les moyens de manoeuvre (11) comportent un vérin (15) lié au tronçon terminal et à la seconde goupille.

7. Appareil de halage à bras selon la revendication 5 ou la revendication 6, caractérisé en ce que cette seconde goupille, plus éloignée du bec (7) que la première goupille, est liée à une extrémité du linguet opposée à son extrémité libre (29).

8. Appareil de halage à bras selon l'une quelconque des revendications 2 à 7, caractérisé en ce que l'extrémité libre (29) du linguet est élargie et comporte des épaulements (30, 31) adaptés, en configuration d'ouverture maximale, à être affrontés à des méplats (25, 26) ménagés sur les tranches des zones latérales du corps de crochet.

9. Appareil de halage à bras selon l'une quelconque des revendications 1 à 8, caractérisé en ce que le jambage est articulé sur une saillie latérale (3A) du tronçon terminal du bras.

10. Véhicule de chargement/déchargement comportant un appareil de halage à bras selon l'une quelconque des revendications 1 à 9, le bras étant coudé dans un plan vertical longitudinal et comportant une poutre (53) articulée autour d'un axe transversal (54) du véhicule et, raccordée approximativement à angle droit à cette poutre, une colonne (55) terminée par ce tronçon terminal et ce crochet articulé.

## Patentansprüche

1. Ladevorrichtung mit einem abgewinkelten Arm, dessen einer Teil eine Säule (55) bildet, und mit einem am freien Ende eines Endstücks (2), das sich am Ende des die Säule (55) bildenden Teils befindet, angebrachten Traghaken (4) mit einer Nase (7) und einem Greifer (8), welche durch ihre freien Ende zusammen einen Maulspalt (10) begrenzen, durch den ein an einer zu ladenden Last befestigtes Trageisen (5) hindurchführbar ist, **dadurch gekennzeichnet**, daß die Nase und der Greifer einen variablen Zwischenabstand haben, indem sie im mittleren Bereich des Hakens relativ zueinander zwischen einer Stellung größter Öffnungsweite und einer Stellung kleinster Öffnungsweite beweglich gelagert sind, und der Körper (11) des Hakens gegenüber der Nase (7) einen Fußteil (12) aufweist, der mit seinem seitlichen Rand eine sich bis zum freien Ende (7A) der Nase erstreckende Anlegefläche (14) bildet und mit seinem der Nase entgegengesetzten Ende (12A) auf einer am Endstück gelagerten Querachse (13) zwischen einer relativ zum Endstück zurückgeschwenkten Anlegestellung und einer Normalstellung verschwenkbar gelagert ist, in welcher die Anlegefläche (14) angenähert parallel zum Endstück liegt, wobei Antriebsmittel (15) zur Steuerung des Hakenkörpers (11) in Stellung relativ zum Endstück (2) und zur Steuerung der Relativstellung von Nase und Greifer vorgesehen sind.

2. Ladevorrichtung mit Arm nach Anspruch 1, **dadurch gekennzeichnet**, daß die Nase (7) am Hakenkörper ausgebildet ist, während das freie Ende (8A) des Greifers durch das Ende einer Zunge (28) gebildet ist, die in einer Ausnehmung (20) des Hakenkörpers zwischen zwei parallelen Wangen (18A, 18B) sitzt, die durch einen die innere Öffnung (9) des Hakens begrenzenden Mittelsteg (19) verbunden sind, wobei sich die Zunge in der Stellung kleinster Öffnungsweite längs des Mittelstegs erstreckt.

3. Ladevorrichtung mit Arm nach Anspruch 2, **dadurch gekennzeichnet**, daß die Antriebsmittel einen hinter der Anlegefläche mit dem Endstück und der Zunge verbundenen Kraftzylinder aufweisen.

4. Ladevorrichtung mit Arm nach Anspruch 2 oder 3, **dadurch gekennzeichnet**, daß die Zunge (28) relativ zum Hakenkörper zwischen ihren Endstellungen verschwenkbar gelagert ist, indem sie drehbar auf einem ersten Bolzen (35) gelagert ist, welcher sich quer durch die Ausnehmung (20) erstreckt und in Bohrungen (24) des Hakenkörpers sitzt.

5. Ladevorrichtung mit Arm nach Anspruch 3, **dadurch gekennzeichnet**, daß in den seitlichen Wangen des Hakenkörpers Aussparungen (23) in Form von Kreisbogen mit dem Lagerbolzen (35) im Mittelpunkt vorgesehen sind, durch die sich ein an der Zunge befestigter, zweiter Bolzen (17) erstreckt.

6. Ladevorrichtung mit Arm nach Anspruch 5, **dadurch gekennzeichnet,** daß die Antriebsmittel (11) einen mit dem Endstück und dem zweiten Bolzen verbundenen Kraftzylinder (15) aufweisen.

7. Ladevorrichtung mit Arm nach Anspruch 5 oder 6, **dadurch gekennzeichnet**, daß der zweite Bolzen weiter von der Nase (7) entfernt ist als der erste Bolzen und mit dem Ende der Zunge verbunden ist, welches ihrem freien Ende (29) gegenüberliegt.

8. Ladevorrichtung mit Arm nach einem der Ansprüche 2 bis 7, **dadurch gekennzeichnet**, daß das freie Ende (29) der Zunge vergrößert ist und Schultern (30, 31) aufweist, welche in der Stellung größter Öffnungsweite an Abflachungen (25, 26) anlegbar sind, die an den Seitenkanten des Hakenkörpers ausgebildet sind.

9. Ladevorrichtung mit Arm nach einem der Ansprüche 1 bis 8, **dadurch gekennzeichnet**, daß der Fußteil an einem seitlichen Vorsprung (3A) des Endstücks des Arms verschwenkbar gelagert ist.

10. Fahrzeug zum Laden und Abladen mit einer Ladevorrichtung mit Arm nach einem der Ansprüche 1 bis 9, wobei der Arm in einer senkrechten Längsebene abgewinkelt ist und einen auf einer Querachse (54) des Fahrzeugs verschwenkbar gelagerten Balken (53) sowie eine mit diesem Balken etwa im rechten Winkel verbundene Säule (55) aufweist, die in dem Endstück und dem verschwenkbar angebrachten Haken endet.

## Claims

1. Hauling device with an angled arm and a part forming a column (55), having at the free end (3) of a terminal section (2) at the end of the part (55) forming a column a gripping hook (4) having a curved lip (7) and a claw (8) forming between them with their free ends an engaging slot (10) intended to be penetrated by a gripping bar (5) fixed to a load to be hauled up, characterized in that this curved lip and claw have a variable distance between them, being mounted so as to be movable in relation to one another within the hook between a maximum opening configuration and a minimum opening configuration, this hook having a hook body (11) fitted on the opposite side from the curved lip (7) with a leg (12) bordered by a positioning ramp (14) stretching as far as the free end (7A) of the curved lip, and pivotally mounted at its end (12A) furthest from the curved lip on a transverse shaft (13) carried by the terminal section, between a rearward positioning configuration in relation to the terminal section and a normal configuration in which the positioning ramp (14) is approximately parallel to the terminal section, manoeuvring means (15) being provided in order to control the position of the hook body (11) in relation to the terminal section (2) and the position of the curved lip and the claw in relation to one another.

2. Hauling arm device according to Claim 1, characterized in that the curved lip (7) is carried by the hook body, while the free end (8A) of the claw is formed by the end of the pawl (28) engaged in a slot (20) of the hook body between two parallel cheeks (18A, 18B) connected by a web (19) bordering the internal opening (9) of the hook, the pawl fitting alongside this web in the minimum opening configuration.

3. Hauling arm device according to Claim 2,characterized in that the manoeuvring means comprise a ram connected to the terminal section and to the pawl behind the ramp.

4. Hauling arm device according to Claim 2 or Claim 3, characterized in that the pawl (28) is mounted so as to pivot with respect to the hook body between its extreme positions, being pivotally mounted on the first pin (35) crossing the slot (20) and engaged in holes (24) drilled in the hook body.

5. Hauling arm device according to Claim 3, characterized in that arc-shaped apertures (23) are provided in the side cheeks of the hook body centred on the said pin (35) which are crossed by a second pin (17) which is fixed in relation to the pawl.

6. Hauling arm device according to Claim 5, characterized in that the manoeuvring means (11) comprise a ram (15) connected to the terminal section and to the second pin.

7. Hauling arm device according to Claim 5 or Claim 6, characterized in that this second pin, which is further from the curved lip (7) than the first pin, is connected to an end of the pawl away from its free end (29).

8. Hauling arm device according to one of the Claims 2 to 7, characterized in that the free end (29) of the pawl is widened and has shoulders (30, 31) designed, in the maximum opening configuration, to be brought into contact with flats (25, 26) provided on the edges of the lateral areas of the hook body.

9. Hauling arm device according to any one of Claims 1 to 8, characterized in that the leg is pivotally mounted on a lateral projection (3A) from the terminal section of the arm.

10. Loading and unloading vehicle having a hauling arm device according to any one of Claims 1 to 9, the arm being angled in a vertical longitudinal plane and having a girder (53) pivotally mounted on a transverse shaft (54) on the vehicle, and, joined approximately at right angles to this girder, a column (55) ending in the terminal section and the pivotally mounted hook.
